(19) Europäisches Patentamt
European Patent Office
Office européen des brevets

(11) Veröffentlichungsnummer: **0 469 429 A2**

# (12) EUROPÄISCHE PATENTANMELDUNG

(21) Anmeldenummer: **91112276.0**

(22) Anmeldetag: **22.07.91**

(51) Int. Cl.[5]: **C09J 133/02**, C09J 133/04, C08F 2/10

(30) Priorität: **30.07.90 DE 4024192**
**06.06.91 DE 4118634**

(43) Veröffentlichungstag der Anmeldung:
**05.02.92 Patentblatt 92/06**

(84) Benannte Vertragsstaaten:
**AT BE CH DE DK ES FR GB GR IT LI LU NL SE**

(71) Anmelder: **UHU GmbH**
**Hermannstrasse 7**
**W-7580 Bühl (Baden)(DE)**

(72) Erfinder: **Engmann, Lothar, Dipl.-Ing. (FH)**
**Senftertalweg 2c**
**W-7580 Bühl - Kappelwindeck(DE)**

(74) Vertreter: **Dr. Elisabeth Jung Dr. Jürgen Schirdewahn Dipl.-Ing. Claus Gernhardt**
**P.O. Box 40 14 68 Clemensstrasse 30**
**W-8000 München 40(DE)**

## (54) Wässrige Klebstofflösungen ohne organisches Lösungsmittel.

(57) Die Erfindung stellt neue wäßrige Klebstofflösungen zur Verfügung, welche kein organisches Lösungsmittel enthalten. Diese Lösungen sind ganz klar und zeigen die vom Verbraucher gewünschte fühlbare Klebrigkeit.
Die Lösungen enthalten als wirksame Klebstoffkomponente Mischpolymerisate aus Acrylsäure, Vinylacetat und einem damit copolymerisierbaren monomeren Tensid, welches aus bestimmten Verbindungstypen ausgewählt ist. Eine der ausgewählten Verbindungstypen ist
ein Polyoxyethylenallylalkohol(Polyoxyethylenglykolallyläther) der nachstehenden Formel IA

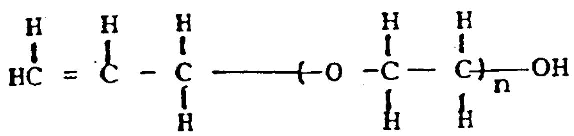

(IA)

oder dessen Methyläther der nachstehenden Formel IB

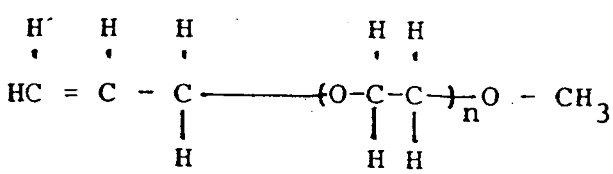

(IB)

mit n = 2 bis 50.

Die Klebstofflösungen lassen sich in einfacher Weise herstellen, indem man eine wäßrige Lösung eines Tensids vorlegt und die mit NaOH teilneutralisierte Acrylsäure in Form einer wäßrigen Lösung sowie das Vinylacetat und gegebenenfalls ein weiteres ethylenisch ungesättigtes Co-Monomer im Verlauf einiger Stunden zuspeist. Die Umsetzung wird zweckmäßig bei Temperaturen im Bereich von 70 bis 85 °c durchgeführt. Bei höheren Monomerkonzentrationen können Molekulargewichtsregler, wie Polyglykole und/oder deren Acetate, im

EP 0 469 429 A2

Reaktionsansatz mitverwendet werden. Auf diese Weise läßt sich der Feststoffgehalt der Klebstofflösung in einfacher Weise auf einen gewünschten Wert einregeln.

Gängige Klebstofflösungen enthalten die klebende Komponente, wie z.B. Mischpolymerisate aus Acrylsäure und Vinylacetat, in Form von Lösungen in organischen Lösungsmitteln, die nach dem Auftrag der Klebstofflösung relativ schnell verdampfen und so auf dem Substrat einen Klebfilm bilden. Geeignete organische Lösungsmittel sind beispielsweise Äthanol, Aceton und Methylacetat.

Im Hinblick auf umweltfreundliches Verhalten und auch aus Kostengründen besteht in neuerer Zeit die Tendenz, Klebstofflösungen auf rein wäßriger Basis zu entwickeln. So wurden alkalilösliche Dispersionen von Polymethacrylaten und Polyacrylaten durch Zusatz von NaOH neutralisiert, wodurch durchscheinende, wenn auch nicht vollständig klare Lösungen erhalten werden konnten, welche allerdings den Nachteil aufweisen, daß sie keine fühlbare Klebrigkeit(tackiness) haben und daher dem Endverbraucher nicht die Gewißheit vermitteln, daß er tatsächlich einen Klebstoff in Händen hat. Die leichte Trübung der Lösung ist überdies ein Indiz dafür, daß die Klebstoffkomponente nicht wirklich in Lösung gegangen ist, sondern als semikolloidale Lösung vorliegt.

Eine andere wäßrige Klebstofflösung auf der Basis von Polyurethanen zeigt Mängel in der Lagerstabilität, was sich in Gelbverfärbung, Trübung und Abnahme der Viskosität bemerkbar macht. Außerdem haben Versuche gezeigt, daß die Klebfestigkeit mit der Zeit allmählich abnimmt.

Es besteht daher ein Bedarf an einer rein wäßrigen Klebstofflösung, welche die vorstehenden Nachteile der bekannten und auf dem Markt befindlichen Präparate nicht aufweist.

Dieses technische Problem wird erfindungsgemäß auf neuartige und überraschende Weise dadurch gelöst, daß als aktive Klebstoffkomponente ein Mischpolymerisat auf der Basis von Acrylsäure, Vinylacetat und mindestens einem damit copolymerisierbaren monomeren Tensid, ausgewählt aus speziellen Typen der nachstehend gekennzeichneten Art, eingesetzt wird, wobei sich dieses Mischpolymerisat direkt in einem rein wäßrigen Medium herstellen läßt, so daß beim Polymerisieren eine fertige Klebstofflösung erhalten wird.

Diese neuen wäßrigen Klebstofflösungen lassen sich mit den verschiedensten Feststoffgehalten herstellen, beispielsweise mit Feststoffgehalten von 32 Gewichtsprozent, aber auch mit wesentlich höheren Feststoffgehalten von 45 Gewichtsprozent. Sie bieten gegenüber den bisher bekannten wäßrigen Klebstofflösungen entscheidende Vorteile. So bilden sie klare Lösungen, die auch die vom Verbraucher gewünschte fühlbare Klebrigkeit aufweisen, sich aber trotzdem lagerstabil verhalten und zu guten Endklebefestigkeiten führen. Besonders erwünscht ist die Variationsmöglichkeit im Feststoffgehalt, da sich hierdurch die Wasserkonzentration insgesamt verringern läßt und somit auch die Gefahr einer Welligkeit beim Verkleben von Papier geringer wird. Die wäßrigen Lösungen wirken außerdem wie ein Schnellkleber.

Die erfindungsgemäßen wäßrigen Klebstofflösungen ohne Gehalt an organischem Lösungsmittel sind dadurch gekennzeichnet, daß sie als Klebstoffkomponente ein Mischpolymerisat aus Acrylsäure, Vinylacetat und mindestens einem copolymerisierbaren monomeren Tensid enthalten, ausgewählt aus der Gruppe, bestehend aus:

a) Polyoxyethylenallylalkoholen(Polyoxyethylenglykolallyläther) der nachstehenden Formel IA

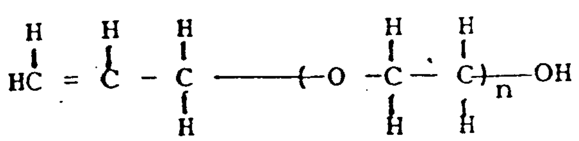

(IA)

oder einem Methyläther der nachstehenden Formel IB

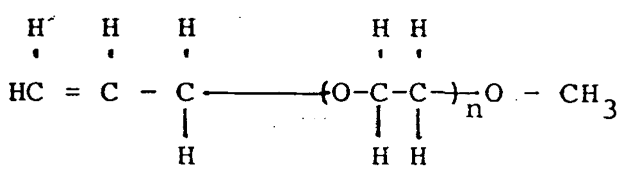

(IB)

jeweils mit 4 bis 24 Oxyethylengruppen im Molekül(n = 4 bis 24);

b) Methoxy-polyethylenglykol-methacrylaten der nachstehenden Formel II

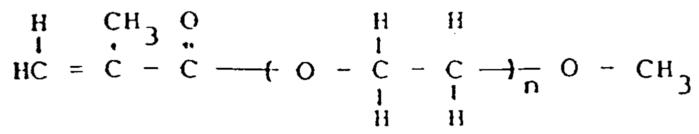

(II)

mit 2 bis 50 Oxyethylengruppen im Molekül(n = 2 bis 50);

c) ethoxylierten Hydroxyethylmethacrylaten der nachstehenden Formel III

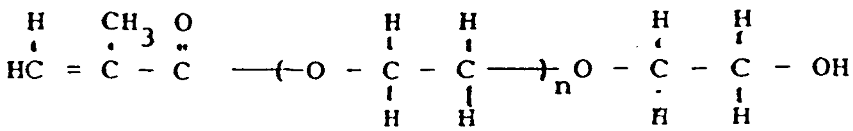

(III)

mit 2 bis 50 Oxyethylengruppen im Molekül(n = 2 bis 50);

d) Mono(methacryloyloxyethyl)phosphorsäureestern der nachstehenden Formel IV

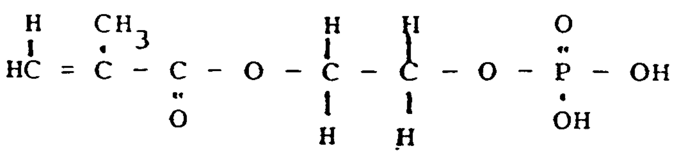

(IV)

und/oder einem Salz davon;

e) dem Ammoniumsalz der Methacryloyloxyethylschwefelsäure der nachstehenden Formel V

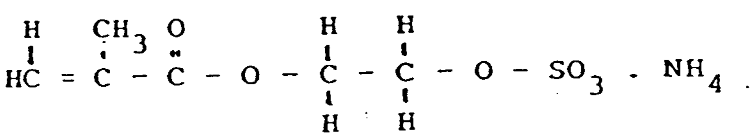

(V)

f) Polyethylenglykolacrylaten und/oder -methacrylaten mit 2 bis 50 Oxyethylengruppen im Molekül;

g) Polypropylenglykolmonoacrylaten und/oder -methacrylaten mit 2 bis 50 Oxypropylengruppen im Molekül.

Aus der DE-OS 2 758 122 sind als Dispergier- und Verdickungsmittel geeignete wasserlösliche Copolymerisate aus ionisierbaren hydrophilen, äthylenisch ungesättigten Monomeren bekannt, welche z.B. für das Verdicken von Pigmentdispersionen und als Zusatz zu Papierstreichmassen geeignet sind.

Diese Polymerisate werden erhalten aus z.B. Acrylsäure oder Methacrylsäure in Kombination mit äthylenisch ungesättigten Verbindungen als Emulgatoren und wahlweise bis zu 50% einer anderen copolymerisierbaren, äthylenisch ungesättigten Verbindung(z.B. Ester, Amide, Nitrile von (Meth)acrylsäure).

Bei der Polymerisation ist die Mitverwendung organischer Lösungsmittel vorgesehen. Über Klebende Eigenschaften dieser Dispersionsmittel wird jedoch nichts berichtet.

In der US-PS 3 890 292 werden wasserdispergierbare, druckempfindliche Klebstoffmischungen in Form von Copolymerisaten aus hydrophilen und hydrophoben Monomeren beschrieben.

Von der hydrophilen Komponente muß mindestens ein Vertreter vorhanden sein, der als Salz ionisierbar ist.

Als hydrophile Komponente werden eingesetzt:

1) Salze von $\alpha,\beta$-ungesättigten Monocarbonsäuren(wie Methycrylsäure),

2) wasserlösliche Polyoxyalkylenester einer $\alpha,\beta$-ungesättigten Monocarbonsäure mit 2 bis 100 Oxyäthylengruppen.

Als wasserunlösliche hydrophobe Monomere werden z.B. $\alpha,\beta$-ungesättigte Carbonsäuren und deren Alkylester sowie Vinylester(z.B.Vinylacetat) eingesetzt.

Für die Polymerisation werden jedoch organische Lösungsmittel wie Äthylacetat und Methyläthylketon mitverwendet.

Auch in der EP-Veröffentlichung 022 339 werden wasserlösliche, druckempfindliche Klebstoffzusammensetzungen in Form von Copolymerisaten beschrieben, welche

a) wasserlösliche, äthylenisch ungesättigte Monomere(z.B.(Meth)acrylsäure, Maleinsäure, Fumarsäure, Vinylpyrrolidon, Acrylamid und Verbindungen des Typs 2-Methoxyalkylmethacrylate);

b) gegebenenfalls wasserunlösliche, äthylenisch ungesättigte Monomere(z.B.Alkyl(meth)acrylate, Vinylacetat, Acrylnitril, Styrol) und

c) durch Additionspolymerisation einpolymerisierbare flüssige Polyätherpolyole oder mehrwertige Alkohole(als Weichmacherkomponente)

enthalten. Bei der Komponente c) handelt es sich aber nicht um Tenside.

Schließlich sind aus dem CPJ-Profile Booklet 1988, Referat 88-081675/12 druckempfindliche Klebstoffe in Form von Latices bekannt, welche durch Emulsionspolymerisation von

A) einem (Meth)acrylatester

B) einem ungesättigten Monomeren mit Hydroxylgruppe, wie 2-Hydroxy(meth)acrylat,

C) gegebenenfalls einem ungesättigten Monomeren mit Sulfongruppe, wie Styrolsulfonsäure,

D) gegebenenfalls einem weiteren ungesättigten Monomeren, wie (Meth)acrylsäure, Maleinsäure, Vinylacetat, (Meth)acylamid und

E) einem Benzoguanaminharz

in Wasser erhalten werden.

Klare wäßrige Klebstofflösungen werden jedoch nicht offenbart.

Gemäß einer weiteren Ausführungsform kann das erfindungsgemäß als Klebstoffkomponente eingesetzte Mischpolymerisat zusätzlich zu Acrylsäure, Vinylacetat und dem ausgewählten monomeren Tensid als Comonomer einen $C_{1-10}$-Alkylester, vorzugsweise einen $C_{1-4}$-Alkylester, der Acrylsäure und/oder Methacrylsäure und/oder Vinylpyrrolidon und/oder ein Derivat davon enthalten.

Überraschenderweise hat sich gezeigt, daß die Anwesenheit eines copolymerisierbaren monomeren Tensids der ausgewählten Art in der Reaktionsmischung die Polymerisationsreaktion verlangsamt und dadurch ihren Ablauf leichter beherrschbar macht, so daß das Durchschnittsmolekulargewicht(K-Wert) des Mischpolymerisats in gewünschter Weise eingestellt werden kann. Dabei läßt sich jedoch vermeiden, daß kolloidale Polymerlösungen entstehen, welche immer einen gewissen Trübungsgrad aufweisen. Vielmehr ist die das gebildete Mischpolymerisat enthaltende Klebstofflösung gemäß der Erfindung immer klar, auch bei höheren Gehalten an Vinylacetat.

Besonders zweckmäßig ist es, wenn die betreffenden monomeren Tenside Gemische mit einer unterschiedlichen Anzahl von Oxyäthylengruppen darstellen.

Bei Verwendung eines Tensids des Typs a) handelt es sich bevorzugt um ein Gemisch aus Polyoxyethylenallylalkoholen der Formel IA und/oder deren Methyläther der Formel IB der folgenden Zusammensetzung:

a) Polyoxyethylenallylalkohole der Formel IA und/oder deren Methyläther der Formel IB mit 4 bis 10, vorzugsweise 4 bis 8 und insbesondere 4 bis 6 Oxyethylengruppen und

b) Polyoxyethylenallylalkohole der Formel IA und/oder deren Methyläther der Formel IB mit 10 bis 24, vorzugsweise 14 bis 24, besonders bevorzugt 18 bis 24 und insbesondere 20 bis 24 Oxyethylengruppen.

Insbesondere eignet sich ein Gemisch aus einem Polyoxyethylenallylalkohol der Formel IA und/oder dessen Methyläther der Formel IB mit 4 Oxyethylengruppen im Molekül und einem Polyoxyethylenallylalkohol der Formel IA und/oder dessen Methyläther der Formel IB mit 20 bis 24 und insbesondere 23,5 Oxyethylengruppen im Molekül.

Dabei werden die beiden Typen (4 Oxyethylengruppen bzw. 20 bis 24 Oxyethylengruppen im Molekül) ganz besonders zweckmäßig im Gewichtsverhältnis 1:1 eingesetzt.

Falls das monomere Tensid eine Verbindung des Typs (b) ist, weist diese vorzugsweise 4 bis 24 Oxyethylengruppen auf(vgl. Formel II).

Insbesondere handelt es sich um Gemische von Verbindungen der Formel(II) mit einer unterschiedlichen Anzahl von Oxyethylengruppen im Molekül, wobei die kürzerkettigen Verbindungen zweckmäßig 4 bis 10, vorzugsweise 4 bis 8 und insbesondere 4 bis 6 Oxyethylengruppen im Molekül enthalten, während in den längerkettigen Verbindungen der Formel (II) 10 bis 24, vorzugsweise 14 bis 24, besonders bevorzugt 18 bis 24 und insbesondere 20 bis 24 Oxyethylengruppen im Molekül vorhanden sind.

Falls eine Verbindung des Typs(c) als monomeres Tensid ausgewählt wird, enthält diese zweckmäßig 2 bis 10 Oxyethylengruppen im Molekül(vgl. Formel III).

Die neuen wäßrigen Klebstofflösungen der Erfindung lassen sich auf einfache Weise herstellen, indem man eine wäßrige Lösung des ausgewählten copolymerisierbaren monomeren Tensids vorlegt und dann eine wäßrige Lösung von mit NaOH teilneutralisierter Acrylsäure und Vinylacetat und eine wäßrige Lösung eines Radikalinitiators zuspeist.

Die Zuspeisungsgeschwindigkeit dieser Komponenten zur wäßrigen Vorlage des Tensids beträgt zweckmäßig 4 bis 6 Stunden.

Die Polymerisationsreaktion wird im allgemeinen bei Temperaturen im Bereich von 70 bis 85 °C, zweckmäßig im Bereich von 78 bis 82 °C und insbesondere bei ca. 80 °C durchgeführt.

Es kann jeder übliche Reaktionskessel mit Rücklaufeinrichtung für verdampfende Komponenten verwendet werden. Sehr geeignet sind Reaktionskessel mit mehreren Kühlstufen und einer zusätzlichen Kühlung im Deckel.

Als Radikalinitiator wird üblicherweise Kaliumpersulfat in Mengen von 0,1 bis 0,8 Gewichtsprozent, bezogen auf das Gesamtgemisch, verwendet.

Vinylacetat kann auch der wäßrigen Lösung der teilneutralisierten Acrylsäure zugemischt und diese Mischung insgesamt in die vorgelegte wäßrige Tensidlösung eingespeist werden. Es muß jedoch unbedingt darauf geachtet werden, daß stets eine wäßrige Tensidlösung vorgelegt wird, um sicherzustellen, daß das Vinylacetat sowie die Acrylsäure trotz des Fehlens eines organischen Lösungsmittels tatsächlich in das sich bildende Mischpolymerisat eingebaut werden. Gewünschtenfalls kann eine Teilmenge an zB. Vinylacetat auch von Anfang an in der vorgelegten wäßrigen Tensidlösung vorhanden sein.

Falls weitere Comonomere, z.B. Vinylpyrrolidon, mitverwendet werden, so gilt für sie das vorstehend für Vinylacetat Gesagte.

Das in der Vorlage vorhandene monomere Tensid wirkt während des Polymerisationsvorganges auch als Antischaummittel, insbesondere wenn es Komponenten mit einer relativ geringen Anzahl von Oxyethylengruppen im Molekül enthält.

Das Polymerisationsverfahren läßt sich in Abhängigkeit von der Konzentration der Reaktionskomponenten und gegebenenfalls unter Zusatz von Reglern für das Molekulargewicht so steuern, daß Klebstofflösungen mit unterschiedlichen Feststoffgehalten gebildet werden. Diese Möglichkeit ist wesentlich, um Klebstofflösungen zur Verfügung stellen zu können, die für verschiedene Klebvorgänge bzw. Klebtechniken jeweils optimal sind, ohne daß die Notwendigkeit einer nachträglichen Verdünnung mit Wasser oder der Aufkonzentrierung durch Wasserentzug besteht.

Für die Herstellung einer Klebstofflösung mit einem Feststoffgehalt von 32 Gewichtsprozent werden die Komponenten beispielsweise in den folgenden Mengen angewendet, jeweils bezogen auf die gesamte Reaktionsmischung:

| | |
|---|---|
| a) Acrylsäure | 19 bis 21 Gewichtsprozent |
| b) NaOH | 0,5 bis 4 Gewichtsprozent |
| c) Vinylacetat, gegebenenfalls eine weitere copolymerisierbare ungesättigte Verbindung der angegebenen Art | 8 bis 12 Gewichtsprozent |
| d) monomeres Tensid | 0,1 bis 5 Gewichtsprozent |
| e) Radikalinitiator | 0,1 bis 0,8 Gewichtsprozent |
| f) Wasser | Rest zu 100 Gewichtsprozent |

Für die Herstellung einer Klebstofflösung mit einem wesentlich höheren Feststoffgehalt von 45 Gewichtsprozent werden die Komponenten hingegen beispielsweise in den folgenden Mengen angewendet, jeweils bezogen auf die gesamte Reaktionsmischung:

| | |
|---|---|
| a) Acrylsäure | 20 bis 24 Gewichtsprozent |
| b) NaOH | 0,5 bis 4 Gewichtsprozent |
| c) Vinylacetat, gegebenenfalls eine weitere ungesättigte Verbindung der angegebenen Art | 12 bis 16 Gewichtsprozent |
| d) monomeres Tensid | 0,1 bis 5 Gewichtsprozent |
| e) Radikalinitiator | 0,1 bis 0,8 Gewichtsprozent |
| f) Molekulargewichtsregler | 1 bis 20 Gewichtsprozent |
| g) Wasser | Rest zu 100 Gewichtsprozent |

In diesem Fall wird ein Molekulargewichtsregler mitverwendet, um zu vermeiden daß sich infolge der höheren Konzentrationen an Acrylsäure und Vinylacetat Mischpolymerisate mit einem zu hohen Molekulargewicht bilden und dadurch die höher konzentrierten Lösungen zu viskos werden.

Gemäß einer weiteren bevorzugten Ausführungsform, welche sich insbesondere für monomere Tenside der Gruppe (a) eignet, werden für die Herstellung einer Klebstofflösung mit einem Feststoffgehalt von 31 bis 33 Gewichtsprozent die Komponenten beispielsweise in den folgenden Mengen angewendet, jeweils bezogen auf die gesamte Reaktionsmischung:

| | |
|---|---|
| a) Acrylsäure | 12 bis 18 Gewichtsprozent |
| b) NaOH | 0,5 bis 4 Gewichtsprozent |
| c) Vinylacetat und gegebenenfalls weiteres Comonomer der vorstehend angegebenen Art | 12 bis 18 Gewichtsprozent |
| d) monomeres Tensid | 0,1 bis 5 Gewichtsprozent |
| e) Radikalinitiator | 0,1 bis 0,8 Gewichtsprozent |
| f) Wasser | Rest zu 100 Gewichtsprozent |

Für die Herstellung einer Klebstofflösung mit einem wesentlich höheren Feststoffgehalt von 44 bis 46 Gewichtsprozent werden die Komponenten hingegen beispielsweise in den folgenden Mengen angewendet, jeweils bezogen auf die gesamte Reaktionsmischung, wobei sich diese Ausführungsform, gleichfalls besonders gut für monomere Tenside der Gruppe (a) eignet:

| | | |
|---|---|---|
| a) | Acrylsäure | 20 bis 24 Gewichtsprozent |
| b) | NaOH | 0,5 bis 4 Gewichtsprozent |
| c) | Vinylacetat und gegebenenfalls weiteres Comonomer der vorstehend angegebenen Art | 16 bis 20 Gewichtsprozent |
| d) | monomeres Tensid | 0,1 bis 5 Gewichtsprozent |
| e) | Radikalinitiator | 0,1 bis 0,8 Gewichtsprozent |
| f) | Molekulargewichtsregler | 1 bis 20 Gewichtsprozent |
| g) | Wasser | Rest zu 100 Gewichtsprozent |

Auch in diesem Fall wird ein Molekulargewichtsregler mitverwendet, um zu vermeiden, daß sich infolge der höheren Konzentrationen an Acrylsäure bzw. Vinylacetat Mischpolymerisate mit einem zu hohen Molekulargewicht bilden und dadurch die höher konzentrierten Lösungen zu viskos werden.

Als Regler für das Molekulargewicht eignen sich beispielsweise Polyglykole, wie Triethylenglykol, oder Ester solcher Glykole, wie Triethylenglykoldiacetat.

Ferner kommen als Regler für das Molekulargewicht und/oder zur Verbesserung der Eigenschaften des Reaktionsprodukts in der Lösung Vertreter von Verbindungen in Betracht, die aus der folgenden Gruppe ausgewählt sind: Alkylphenolpolyglykoläther mit 10 bis 200 und insbesondere bis 30 Oxyethylengruppen im Molekül, wie ein Nonylphenolpolyglykolether; Polyglykole mit Molekulargewichten im Bereich von 200 bis 20000; Glycerin und Glycerinderivate, insbesondere Glycerinindi- und triacetat, Glycerintrioxyethylether und Glycerinetheracetat; Alkylphenolethoxylate und Alkylphenolethersulfate; Dodecylbenzolsulfate und Na-Xylolsulfonat; Phosphatester und Triethylcitrat.

Der Regler wird der vorgelegten wäßrigen Tensidlösung und/oder der Einspeisung der übrigen Monomeren(Acrylsäure und/oder Vinylacetat) zugesetzt.

Den erfindungsgemäßen wäßrigen Klebstofflösungen können wahlweise auch noch Zusatzstoffe beigemischt werden, um bestimmte Hafteigenschaften zu erzielen, beispielsweise Tenside, die nicht in die Klebstoffkomponente mit einpolymerisiert werden, sowie wasserlösliche Weichmacher.

Die Erfindung wird durch die nachstehenden Beispiele näher erläutert.

Beispiel 1

Ein 1 l fassender Vierhalsrundkolben, der mit zwei Tropftrichtern, Rührer, Thermometer und Rückflußkühler ausgestattet ist, wird mit 470 g Wasser sowie mit

5 g Polyoxyethylenallylalkohol mit 4 EO und
5 g Polyoxyethylenallylalkohol mit 24 EO
} (Tensid-Monomer)
(EO = Oxyethylengruppe)

beschickt. Der eine Tropftrichter enthält 196 g Acrylsäure, 80g Wasser, 56 g NaOH(20%ig) und 84 g Vinylacetat. Der andere Tropftrichter enthält eine Lösung von 4 g Kaliumpersulfat in 100 g Wasser. Das im Reaktionskolben vorgelegte Wasser mit dem Tensid-Monomer wrid unter Rühren auf 80 °C erhitzt. Nach Erreichen dieser Temperatur fließen aus beiden Zulaufgefäßen die Lösungen innerhalb von 4 Stunden zu. Es schließt sich eine Nachpolymerisationszeit von 1 Stunde an. Dann wird abgekühlt. Es wird eine klare Polymerlösung mit einem Feststoffgehalt von 32% erhalten.
Das Polymerisat hat einen K-Wert von 48.

Beispiel 2

Man arbeitet wie in Beispiel 1 beschrieben, legt jedoch 340 g Wasser, 5 g Polyoxyethylenallylalkohol mit 4 EO und 5 g Polyoxyethylenallylalkohol mit 24 EO und 60 g Triethylenglykol vor. Der Zulauf I besteht aus 226 g Acrylsäure, 40 g Wasser, 60 g NaOH(20%ig) und 144 g Vinylacetat. Zulauf II besteht aus 6 g Kaliumpersulfat in 114 g Wasser. Man erhält eine klare Polymerlösung mit einem Feststoffgehalt von 45%. Das Polymerisat hat einen K-Wert von 40.

Beispiel 3

Man arbeitet wie in Beispiel 2 beschrieben, legt jedoch als Regler in der Tensidlösung 60 g Triethylenglykoldiacetat vor. Die Zuläufe bestehen aus den gleichen Komponenten wie in Beispiel 2.
Man erhält eine klare Polymerlösung mit einem Feststoffgehalt von 45% und einem K-Wert von 35.

Beispiel 4

Man arbeitet wie in Beispiel 2 beschrieben, verwendet jedoch die folgenden Regler in der Tensidlösung:

a) Glycerindiacetat
b) Glycerintriacetat
c) Triethylenglykoldiacetat

Die jeweils erhaltene Polymerlösung ist klar und hat einen Feststoffgehalt von 45%.

Beispiel 5

Man arbeitet wie in Beispiel 2 beschrieben, legt jedoch 340 g Wasser, 10 g ethoxyliertes Hydroxyethylmethacrylat (n = 4,5 EO) und 60 g Triethylenglykoldiacetat vor.
Die Zuläufe bestehen aus den gleichen Komponenten wie in Beispiel 2 angegeben.
Man erhält eine klare Polymerlösung mit einem Feststoffgehalt von 45%.

Beispiel 6

Man arbeitet wie in Beispiel 2 beschrieben, legt jedoch 340 g Wasser, 10 g Polyethylenglykolmonomethacrylat (n = 6 EO) und 60g Triethylenglykoldiacetat vor.
Die Zuläufe bestehen aus den gleichen Komponenten wie in Beispiel 2 angegeben. Man erhält eine klare Polymerlösung mit einem Feststoffgehalt von 45%.

Beispiel 7

Man arbeitet wie in Beispiel 2 beschrieben, legt jedoch 340 g Wasser, 10 g Mono-(methacryloyloxyethyl)phosphorsäureester und 60 g Triethylenglykoldiacetat vor.
Die Zuläufe bestehen aus den gleichen Komponenten wie in Beispiel 2 angegeben.
Man erhält eine klare Polymerlösung mit einem Feststoffgehalt von 45%.

Beispiel 8

Man arbeitet wie vorstehend beschrieben, legt jedoch 340 g Wasser,
5g Polyoxyethylenallylalkohol mit 4 EO und
5g Polyoxyethylenallylalkohol mit 23,5 EO
60 g Triethylenglykoldiacetat und 40 g Vinylacetat vor.
Der Zulauf I besteht aus 226 g Acrylsäure, 40 g Wasser , 60g NaOH(20%ig) und 104 g Vinylacetat. Zulauf II besteht aus 6 g Kaliumpersulfat in 114 g Wasser.
Man erhält eine klare Polymerlösung mit einem Feststoffgehalt von 45% und einem K-Wert von 80.

Beispiel 9

Man arbeitet wie in Beispiel 2 beschrieben, jedoch wird die Reaktionstemperatur auf 70 ° C begrenzt.
Es wird eine klare hochviskose Polymerlösung mit einem Feststoffgehalt von 45% erhalten, die einen K-Wert von 88 aufweist.

Beispiel 10

Herstellung einer wäßrigen Klebstofflösung mit einem Feststoffgehalt von 32 Gewichtsprozent im industriellen Maßstab. Es wird ein Reaktionskessel mit Mehrstufenkühlung und einem Fassungsvermögen für einen Reaktionsansatz von 5 Tonnen verwendet.

Die Zusammensetzung ist wie folgt

| | |
|---|---|
| Vorlage: | 1 Gew.% Tensidmischung aus 0,5 Gew.% Polyoxyethylenallylalkohol der Formel IA-(n = 4) und 0,5 Gewichtsprozent Polyoxyethylenallylalkohol der Formel IA(n = 23,5) gelöst in 47 Gew.% Wasser |
| Monomerzulauf: | a) 19,6 Gew.% Acrylsäure, teilneutralisiert mit 5,6 Gew.% 20 -prozentiger NaOH, in 8 Gew.% Wasser |
| | b) 8,4 Gew.% Vinylacetat |
| Radikalinitiator: | 0,4 Gew.% Kaliumpersulfat in 10,0 Gew.% Wasser. |

Die Reaktionsmischung wird während der Polymerisation auf 80° C gehalten. Die Polymerisationsdauer beträgt einschließlich Nachpolymerisation insgesamt 5 Stunden.

Die erhaltene wäßrige Klebstofflösung hat einen K-Wert von 48.

Beispiel 11

Herstellung einer wäßrigen Klebstofflösung mit einem Feststoffgehalt von 45 Gew.% im industriellen Maßstab.

Es wird der gleiche Reaktionskessel wie in Beispiel 10 verwendet.

Die Zusammensetzung des Reaktionsansatzes ist wie folgt:

| | |
|---|---|
| Vorlage | 1 Gew.% Tensidmischung wie in Beispiel 10, gelöst in 34 Gew.% Wasser, sowie 6 Gew.% Triethylenglykol als Regler für das Molekulargewicht |
| Monomerzulauf | a) 22,6 Gew.% Acrylsäure, teilneutralisiert mit 6 Gew.% 20-prozentiger NaOH, in 4 Gew.% Wasser |
| | b) 14,4 Gew.% Vinylacetat |
| Radikalinitiator | 0,6 Gew.% Kaliumpersulfat in 11,4 Gew.% Wasser. |

Die Umsetzung wird wie in Beispiel 10 durchgeführt und sie führt zu einer Klebstofflösung mit einem K-Wert von 35.

Beispiel 12

Man arbeitet wie vorstehend beschrieben, legt jedoch 340 g Wasser,
5 g Polyoxyethylenallylalkohol mit 4 EO
5 g Polyoxyethylenallylalkohol mit 24 EO und
60 g Triethylenglykoldiacetat vor.
Der Zulauf I besteht aus 150 g Acrylsäure, 40 g Wasser, 60 g NaOH(20%ig), 144 g Vinylacetat und 76 g Vinylpyrrolidon.
Der Zulauf II besteht aus 6 g Kaliumpersulfat in 114 g Wasser.

Man erhält eine klare Polymerlösung mit einem Feststoffgehalt von 45%.

Beispiel 13

Man arbeitet wie vorstehend beschrieben, legt jedoch 340 g Wasser, 10 g Hydroxyethylmethacrylat-Ammoniumsulfat und 60 g Triethylenglykoldiacetat vor. Die Zuläufe bestehen aus den gleichen Komponenten wie in Beispiel 2 angegeben. Man erhält eine klare Polymerlösung mit einem Feststoffgehalt von 45%.

Beispiel 14

Man arbeitet wie vorstehend beschrieben, legt jedoch 340 g Wasser, 10 g Polypropylenglykolmonomethacrylat (6 Oxypropylengruppen) und 60 g Triethylenglykoldiacetat vor . Die Zuläufe bestehen aus den gleichen Komponenten wie in Beispiel 2 angegeben.

Man erhält eine fast klare Polymerlösung mit einem Feststoffgehalt von 45%.

Beispiel 15

Man arbeitet wie vorstehend beschrieben, legt jedoch 340 g Wasser, 10 g Methoxy-Polyethylenglykolmethacrylat (8 EO) und 60 g Triethylenglykoldiacetat vor.
Die Zuläufe bestehen aus den gleichen Komponenten wie in Beispiel 2 angegeben.
Man erhält eine fast klare Polymerlösung mit einem Feststoffgehalt von 45%.

Beispiel 16.

Man arbeitet wie vorstehend angegeben, legt jedoch 340 g Wasser,
5 g Polyoxyethylenallylalkohol mit 4 EO
5 g Polyoxyethylenallylalkohol mit 24 EO und
60 g Triethylenglykoldiacetat vor.
Der Zulauf I besteht aus 226 g Acrylsäure, 40 g Wasser, 60 g NaOH(20%ig), 120 g Vinylacetat und 24 g Methylmethacrylat. Der Zulauf II besteht aus 6 g Kaliumpersulfat in 114 g Wasser.
Man erhält eine klare Polymerlösung mit einem Feststoffgehalt von 45%.

Beispiel 17

Man arbeitet wie vorstehend in Beispiel 1 angegeben, jedoch wird anstelle von Kaliumpersulfat als Initiator Azobisamidinopropandihydrochlorid eingesetzt.
Es wird eine klare Polymerlösung mit einem Feststoffgehalt von 32% erhalten. Der K-Wert beträgt 65.

Beispiel 18

Ein 1 l fassender Vierhalsrundkolben, der mit zwei Tropftrichtern, Rührer, Thermometer und Rückflußkühler ausgestattet ist, wird mit 500 g Wasser sowie mit

5 g Methyläther von Polyoxyethylenallylalkohol mit 4 EO und
5 g Methyläther von Polyoxyethylenallylalkohol
(Tensid-Monomer)

mit 24 EO
(EO = Oxyethylengruppe)

beschickt. Der eine Tropftrichter enthält 160 g Acrylsäure, 80 g Wasser, 26 g NaOH(20%ig) und 120 g Vinylacetat. Der andere Tropftrichter enthält eine Lösung von 4 g Kaliumpersulfat in 100 g Wasser. Das im Reaktionskolben vorgelegte Wasser mit dem Tensid-Monomer wird unter Rühren auf 80°C erhitzt. Nach Erreichen dieser Temperatur fließen aus beiden Zulaufgefäßen die Lösungen innerhalb von 4 Stunden zu. Es schließt sich eine Nachpolymerisationszeit von 1 Stunde an. Dann wird abgekühlt. Es wird eine klare Polymerlösung mit einem Feststoffgehalt von 32% erhalten.
Das Polymerisat hat einen K-Wert von 48.

Beispiel 19

Man arbeitet, wie in Beispiel 18 beschrieben, legt jedoch 370 g Wasser,
5 g Methyläther von Polyoxyethylenallylalkohol mit 4 EO und
5 g Methyläther von Polyoxyethylenallylalkohol mit 24 EO sowie
60 g Triethylenglykol vor.
Der Zulauf I besteht aus 200 g Acrylsäure, 60 g Wasser, 30 g NaOH(20%ig) und 170 g Vinylacetat. Zulauf II besteht aus 6 g Kaliumpersulfat in 114 g Wasser. Man erhält eine klare Polymerlösung mit einem Feststoffgehalt von 45%.

Das Polymerisat hat einen K-Wert von 40.

Beispiel 20

Man arbeitet, wie in Beispiel 19 beschrieben, legt jedoch als Regler in der Tensidlösung 60 g Triethylenglykoldiacetat vor. Die Zuläufe bestehen aus den gleichen Komponenten wie in Beispiel 19.

Man erhält eine klare Polymerlösung mit einem Feststoffgehalt von 45% und einem K-Wert von 35.

Beispiel 21

Man arbeitet, wie in Beispiel 19 beschrieben, verwendet jedoch die folgenden Regler in der Tensidlösung:

a) Glycerindiacetat
b) Glycerintriacetat
c) Triethylenglykoldiacetat

Die jeweils erhaltene Polymerlösung ist klar und hat einen Feststoffgehalt von 45%.

**Patentansprüche**

**1.** Wäßrige Klebstofflösung ohne Gehalt an organischem Lösungsmittel, dadurch gekennzeichnet, daß sie als Klebstoffkomponente ein Mischpolymerisat aus Acrylsäure, Vinylacetat und mindestens einem copolymerisierbaren monomeren Tensid enthält, ausgewählt aus der Gruppe, bestehend aus:

a) Polyoxyethylenallylalkoholen(Polyoxyethylenglykolallyläther) der nachstehenden Formel IA

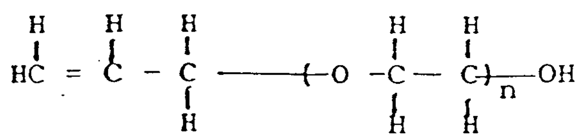

(IA)

oder einem Methyläther der nachstehenden Formel IB

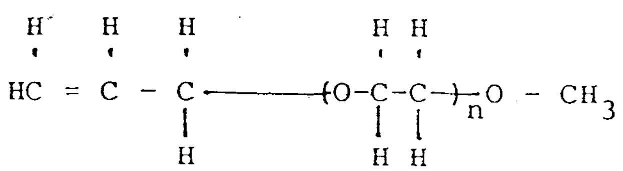

(IB)

jeweils mit 4 bis 24 Oxyethylengruppen im Molekül (n = 4 bis 24);

b) Methoxy-polyethylenglykol-methacrylaten der nachstehenden Formel II

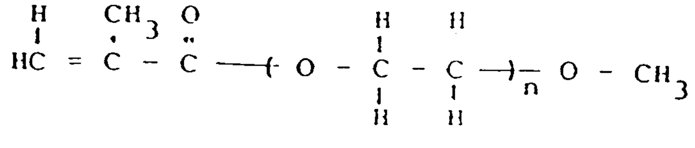

(II)

mit 2 bis 50 Oxyethylengruppen im Molekül (n = 2 bis 50);

c) ethoxylierten Hydroxyethylmethacrylaten der nachstehenden Formel III

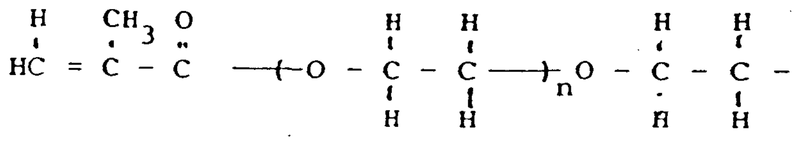 (III)

mit 2 bis 50 Oxyethylengruppen im Molekül (n = 2 bis 50);

d) Mono(methacryloyloxyethyl)phosphorsäureestern der nachstehenden Formel IV

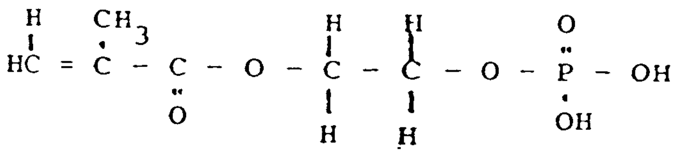 (IV)

und/oder einem Salz davon;

e) dem Ammoniumsalz der Methacryloyloxyethylschwefelsäure der nachstehenden Formel V

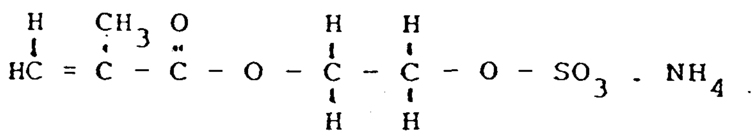 (V)

f) Polyethylenglykolacrylaten und/oder -methacrylaten mit 2 bis 50 Oxyethylengruppen im Molekül;

g) Polypropylenglykolmonoacrylaten und/oder -methacrylaten mit 2 bis 50 Oxypropylengruppen im Molekül.

2. Wäßrige Klebstofflösung nach Anspruch 1, dadurch gekennzeichnet, daß das Mischpolymerisat zusätzlich als Comonomer einen $C_{1-10}$-Alkylester, vorzugsweise $C_{1-4}$-Alkylester, der Acrylsäure und/oder der Methacrylsäure enthält.

3. Wäßrige Klebstofflösung nach Anspruch 1, dadurch gekennzeichnet, daß das Mischpolymerisat zusätzlich als Comonomer Vinylpyrrolidon und/oder ein Derivat davon enthält.

4. Wäßrige Klebstofflösung nach Anspruch 1 bis 3, dadurch gekennzeichnet, daß das Mischpolymerisat als copolymerisierbares monomeres Tensid des Typs(a) ein Gemisch aus Polyoxyethylenallylalkoholen der Formel IA und/oder deren Methyläther der Formel IB mit einer unterschiedlichen Anzahl von Oxyethylengruppen im Molekül enthält.

5. Wäßrige Klebstofflösung nach Anspruch 4, dadurch gekennzeichnet, daß das Mischpolymerisat als copolymerisierbares monomeres Tensid des Typs (a) ein Gemisch aus
   (a) Polyoxyethylenallylalkoholen der Formel IA und/oder deren Methyläther der Formel IB mit 4 bis 10, vorzugsweise 4 bis 8 und insbesondere 4 bis 6 Oxyethylengruppen und
   (b) Polyoxyethylenallylalkoholen der Formel IA und/oder deren Methyläther der Formel IB mit 10 bis 24, vorzugsweise 14 bis 24, besonders bevorzugt 18 bis 24 und insbesondere 20 bis 24 Oxyethylengruppen enthält.

6. Wäßrige Klebstofflösung nach Anspruch 5, dadurch gekennzeichnet, daß das Mischpolymerisat als copolymerisierbares monomeres Tensid des Typs (a) ein Gemisch aus einem Polyoxyethylenallylalkohol der Formel IA und/oder dessen Methyläther der Formel IB mit 4 Oxyethylengruppen im Molekül und einem Polyoxyethylenallylalkohol der Formel IA und/oder dessen Methyläther der Formel IB mit 20 bis 24 und insbesondere 23,5 Oxyethylengruppen im Molekül enthält.

7. Wäßrige Klebstofflösung nach Anspruch 6 , dadurch gekennzeichnet, daß das Mischpolymerisat als copolymerisierbares monomeres Tensid des Typs (a) ein Gemisch aus einem Polyoxyethylenallylalkohol der Formel IA und/oder dessen Methyläther der Formel IB mit 4 Oxyethylengruppen im Molekül und einem Polyoxyethylenallylalkohol der Formel IA und/oder dessen Methyläther der Formel IB mit 20 bis 24 und insbesondere 23,5 Oxyethylengruppen im Molekül im Gewichtsverhältnis 1:1 enthält.

8. Wäßrige Klebstofflösung nach Anspruch 1 bis 3, dadurch gekennzeichnet, daß das Mischpolymerisat als copolymerisierbares monomeres Tensid des Typs (b) eine Verbindung der Formel (II) mit 4 bis 24 und vorzugsweise Gemische von Verbindungen der Formel(II) mit einer unterschiedlichen Anzahl von Oxyethylengruppen im Molekül enthält, wobei die kürzerkettigen Verbindungen zweckmäßig 4 bis 10, vorzugsweise 4 bis 8 und insbesondere 4 bis 6 Oxyethylengruppen im Molekül enthalten, während in den längerkettigen Verbindungen der Formel (II) 10 bis 24, vorzugsweise 14 bis 24, besonders bevorzugt 18 bis 24 und insbesondere 20 bis 24 Oxyethylengruppen im Molekül vorhanden sind.

9. Wäßrige Klebstofflösung nach Anspruch 1 bis 3, dadurch gekennzeichnet, daß das Mischpolymerisat als copolymerisierbares monomeres Tensid des Typs (c) eine Verbindung der Formel(III) mit 2 bis 10 Oxyethylengruppen im Molekül enthält.

10. Verfahren zur Herstellung einer Klebstofflösung nach den Ansprüchen 1 bis 9, dadurch gekennzeichnet, daß man eine wäßrige Lösung des copolymerisierbaren monomeren Tensids vorlegt und die Acrylsäure, welche mit NaOH neutralisiert worden ist, als wäßrige Lösung sowie Vinylacetat und gegebenenfalls ein Comonomer nach Anspruch 2 oder 3 und eine wäßrige Lösung eines Radikalinitiators im Verlauf von vorzugsweise 4 bis 6 Stunden zuspeist.

11. Verfahren nach Anspruch 10, dadurch gekennzeichnet, daß der Radikalinitiator Kaliumpersulfat ist und in einer Menge von 0,1 bis 0,8 Gewichtsprozent, bezogen auf die gesamte Reaktionsmischung angewendet wird.

12. Verfahren nach Anspruch 10 und 11, dadurch gekennzeichnet, daß das Vinylacetat und gegebenenfalls ein Comonomeres nach Anspruch 2 oder 3 mit der wäßrigen Lösung der teilneutralisierten Acrylsäure vermischt und diese Mischung in die vorgelegte wäßrige Lösung des Tensids eingespeist wird.

13. Verfahren nach Anspruch 10 bis 12, dadurch gekennzeichnet, daß die Polymerisation bei einer Temperatur im Bereich von 70 bis 85 °C, vorzugsweise im Bereich von 78 bis 82 °C und insbesondere bei 80 °C durchgeführt wird.

14. Verfahren nach Anspruch 10 bis 13 zur Herstellung einer Lösung mit einem Feststoffgehalt von 31 bis 33 Gewichtsprozent, dadurch gekennzeichnet, daß die Komponenten in den folgenden Mengen angewendet werden, jeweils bezogen auf die gesamte Reaktionsmischung:

| | |
|---|---|
| a) Acrylsäure | 12 bis 18 Gewichtsprozent |
| b) NaOH | 0,5 bis 4 Gewichtsprozent |
| c) Vinylacetat und gegebenenfalls ein Comonomer nach Anspruch 2 oder 3 | 12 bis 18 Gewichtsprozent |
| d) monomeres Tensid | 0,1 bis 5 Gewichtsprozent |
| e) Radikalinitiator | 0,1 bis 0,8 Gewichtsprozent |
| f) Wasser | Rest zu 100 Gewichtsprozent |

**15.** Verfahren nach Anspruch 10 bis 13 zur Herstellung einer Lösung mit einem Feststoffgehalt von 44 bis 46 Gewichtsprozent, dadurch gekennzeichnet, daß die Komponenten in den folgenden Mengen angewendet werden, jeweils bezogen auf die gesamte Reaktionsmischung:

| | |
|---|---|
| a) Acrylsäure | 20 bis 24 Gewichtsprozent |
| b) NaOH | 0,5 bis 4 Gewichtsprozent |
| c) Vinylacetat und gegebenenfalls ein Comonomer nach Anspruch 2 oder 3 | 16 bis 20 Gewichtsprozent |
| d) monomeres Tensid | 0,1 bis 5 Gewichtsprozent |
| e) Radikalinitiator | 0,1 bis 0,8 Gewichtsprozent |
| f) Molekulargewichtsregler | 1 bis 20 Gewichtsprozent |
| g) Wasser | Rest zu 100 Gewichtsprozent |

**16.** Verfahren nach Anspruch 10 bis 13 zur Herstellung einer Lösung mit einem Feststoffgehalt von 32 Gewichtsprozent, dadurch gekennzeichnet, daß die Komponenten in den folgenden Mengen angewendet werden, jeweils bezogen auf die gesamte Reaktionsmischung:

| | |
|---|---|
| a) Acrylsäure | 19 bis 21 Gewichtsprozent |
| b) NaOH | 0,5 bis 4 Gewichtsprozent |
| c) Vinylacetat und gegebenenfalls ein Comonomer nach Anspruch 2 oder 3 | 8 bis 12 Gewichtsprozent |
| d) monomeres Tensid | 0,1 bis 5 Gewichtsprozent |
| e) Radikalinitiator | 0,1 bis 0,8 Gewichtsprozent |
| f) Wasser | Rest zu 100 Gewichtsprozent |

**17.** Verfahren nach Anspruch 16 zur Herstellung einer Lösung mit einem Feststoffgehalt von 32 Gewichtsprozent, dadurch gekennzeichnet, daß die Komponenten der nachstehenden Art und in den angegebenen Mengen angewendet werden, jeweils bezogen auf die gesamte Reaktionsmischung:

| | |
|---|---|
| a) Acrylsäure | 19 bis 21 Gewichtsprozent |
| b) NaOH | 0,5 bis 4 Gewichtsprozent |
| c) Vinylacetat | 8 bis 12 Gewichtsprozent |
| d) Polyoxyethylenallylalkohol oder dessen Methyläther | 0,1 bis 5 Gewichtsprozent |
| e) Kaliumpersulfat | 0,1 bis 5 Gewichtsprozent |
| f) Wasser | Rest zu 100 Gewichtsprozent |

**18.** Verfahren nach Anspruch 10 bis 13 zur Herstellung einer Lösung mit einem Feststoffgehalt von 45 Gewichtsprozent, dadurch gekennzeichnet, daß die Komponenten in den folgenden Mengen angewendet werden, jeweils bezogen auf die gesamte Reaktionsmischung:

| | |
|---|---|
| a) Acrylsäure | 20 bis 24 Gewichtsprozent |
| b) NaOH | 0,5 bis 4 Gewichtsprozent |
| c) Vinylacetat und gegebenenfalls ein Comonomer nach Anspruch 2 oder 3 | 12 bis 16 Gewichtsprozent |
| d) monomeres Tensid | 0,1 bis 5 Gewichtsprozent |
| e) Radikalinitiator | 0,1 bis 0,8 Gewichtsprozent |
| f) Molekulargewichtsregler | 1 bis 20 Gewichtsprozent |
| g) Wasser | Rest zu 100 Gewichtsprozent |

**19.** Verfahren nach Anspruch 18 zur Herstellung einer Lösung mit einem Feststoffgehalt von 45 Gewichtsprozent, dadurch gekennzeichnet , daß die Komponenten der nachstehenden Art und in den angegebenen Mengen angewendet werden, jeweils bezogen auf die gesamte Reaktionsmischung:

| | |
|---|---|
| a) Acrylsäure | 20 bis 24 Gewichtsprozent |
| b) NaOH | 0,5 bis 4 Gewichtsprozent |
| c) Vinylacetat | 12 bis 16 Gewichtsprozent |
| d) Polyoxyethylenallylalkohol oder dessen Methyläther | 0,1 bis 5 Gewichtsprozent |
| e) Kaliumpersulfat | 0,1 bis 0,8 Gewichtsprozent |
| f) Triethylenglykol | 4 bis 20 Gewichtsprozent |
| g) Wasser | Rest zu 100 Gewichtsprozent |

**20.** Verfahren nach Anspruch 15 und 18, dadurch gekennzeichnet, daß der Molekulargewichtsregler ein Polyglykol, insbesondere Triethylenglykol und/oder Propylenglykol ist.

**21.** Verfahren nach Anspruch 15 und 18, dadurch gekennzeichnet, daß der Molekulargewichtsregler Triethylenglykoldiacetat ist.

**22.** Verfahren nach Anspruch 10 bis 21, dadurch gekennzeichnet, daß mindestens eine Verbindung der nachstehenden Gruppe als Molekulargewichtsregler und/oder zur Verbesserung der Eigenschaften des Reaktionsprodukts in der Lösung eingesetzt wird: Alkylphenolpolyglykolether mti 10 bis 200, insbesondere bis zu 30 Oxyethylengruppem im Molekül, wie ein Nonylphenylpolyglykolether; Polyglykole mit Molekulargewichten im Bereich von 200 bis 20 000; Glycerin und Glycerinderivate, insbesondere Glycerindi- und -triacetat, Glycerintrioxyethylether und Glycerinetheracetat, Alkylphenolethoxylate und Alkylphenolethersulfate; Dodecylbenzolsulfonate und Na-Xylolsulfonat; Phosphatester; Triethylcitrat.